(19) Europäisches Patentamt / European Patent Office / Office européen des brevets

(11) **EP 2 425 203 B1**

(12) **FASCICULE DE BREVET EUROPEEN**

(45) Date de publication et mention
de la délivrance du brevet:
**18.11.2020 Bulletin 2020/47**

(21) Numéro de dépôt: **10714030.3**

(22) Date de dépôt: **22.04.2010**

(51) Int Cl.:
**G01B 7/16** (2006.01)

(86) Numéro de dépôt international:
**PCT/EP2010/055384**

(87) Numéro de publication internationale:
**WO 2010/124993 (04.11.2010 Gazette 2010/44)**

(54) **CAPTEUR DE CONTRAINTE ET SON PROCÉDÉ DE RÉALISATION**

SPANNUNGSMESSVORRICHTUNG UND VERFAHREN ZU DEREN HERSTELLUNG

STRAIN GAUGE AND METHOD FOR MANUFACTURING THE SAME

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.04.2009 FR 0952749**

(43) Date de publication de la demande:
**07.03.2012 Bulletin 2012/10**

(73) Titulaire: **Commissariat à l'Énergie Atomique et aux Énergies Alternatives
75015 Paris (FR)**

(72) Inventeur: **GRANGE, Hubert
F-38100 Grenoble (FR)**

(74) Mandataire: **Ilgart, Jean-Christophe et al
BREVALEX
95, rue d'Amsterdam
75378 Paris Cedex 8 (FR)**

(56) Documents cités:
WO-A-2008/059838       US-A- 6 148 662
US-A1- 2006 216 848    US-A1- 2007 151 356
US-A1- 2007 240 519    US-A1- 2008 223 152

EP 2 425 203 B1

**Description**

## DOMAINE TECHNIQUE ET ÉTAT DE LA TECHNIQUE ANTÉRIEURE

L'invention concerne le domaine de la mesure de déformations de structures et plus précisément la fabrication de dispositifs de mesure réalisés par des technologies de fabrication collective utilisées pour la microélectronique et permettant de réaliser un grand nombre de composants sur un même substrat, par exemple en silicium.

Les applications de ces capteurs sont multiples: mesures des déformations en plusieurs points d'une surface, du type d'une aile d'avion ou d'une voile de bateau, qui nécessitent un grand nombre de points de mesures (jusqu'à 2000 points pour une aile d'avion) ou mesures de poids avec des jauges rapportées sur des corps d'épreuves spécifiques, par exemple des balances.

Les mesures de contraintes dans les structures mécaniques sont en général effectuées en fixant des jauges métalliques sur les zones où on désire faire les mesures. Les balances utilisent aussi des jauges de contraintes collées sur des corps d'épreuve en 4 points. Cela permet d'améliorer la précision de mesure en autorisant un montage en pont de Wheatstone avec 2 jauges opposées qui travaillent en traction et 2 jauges qui travaillent en compression. Un exemple de jauge de contrainte sur support souple et un capteur muni de cette jauge sont décrits dans la demande WO94/02815.

Une telle jauge métallique peut être constituée de fils métalliques laminés ou tréfilés collés sur un film plastique (par exemple en Polyimide de 25 à 50 $\mu$m d'épaisseur) ou déposés en couche mince par pulvérisation cathodique sur film plastique de 25 $\mu$m d'épaisseur, formant une piste métallique et des plots de soudure qui permettront la reprise des contacts électriques. La jauge métallique est ensuite gravée chimiquement après une opération de dépôt de résine, et d'une insolation suivant la géométrie désirée et suivie par une révélation qui définit les parties gravées et non gravées.

Les jauges collées sur des corps d'épreuve sont reliées électriquement à des moyens de transmission des signaux détectés par chaque jauge, pour être traités. Ceci se fait au moyen de fils électriques soudés aux plots de contact des jauges. La soudure de fils reliant les composants ne pose pas de problèmes dans les cas de mesures où un nombre limité de capteurs sont utilisés du fait du faible nombre de fils. Il n'y a pas de restriction non plus au nombre de fils quand il n'y a pas de problèmes de place disponible pour le passage des fils ou pour les souder.

Une jauge métallique, fixée à un corps d'épreuve, traversée par un courant électrique circulant dans la piste métallique, se déforme en suivant la déformation du corps d'épreuve, lorsqu'une contrainte est appliquée au corps d'épreuve. Alors, la piste métallique, suivant la déformation imposée, subit proportionnellement une variation de sa résistance.

Connaissant le matériau et la forme du corps d'épreuve ainsi que la variation de résistance il est possible de remonter par calcul à la déformation initiale du corps d'épreuve et à la contrainte dans le corps d'épreuve.

Ces jauges peuvent être utilisées pour mesurer des déformations en un certain nombre de points prédéterminés qui permettront de remonter aux contraintes exercées sur la structure entière: on rencontre ce type de mesures pour analyser les contraintes sur une aile d'avion, ou sur un ouvrage en béton tel qu'un pont ou sur un barrage ou encore sur d'autres structures. Ces mesures nécessitent l'utilisation d'un très grand nombre de jauges montées à l'unité ou en ponts de Wheatstone, et demandent donc un grand nombre de fils qui devront être soudés aux jauges et reliés aux appareils de mesure. En particulier, le nombre de 2000 jauges est couramment cité pour les mesures de contraintes sur une aile d'avion.

De plus, le câblage des fils est difficile ou impossible dans un certain nombre de cas :

- pour des jauges à sorties longues ou lorsqu'il est impossible de disposer au-dessus du point de positionnement de la jauge d'un espace suffisant pour effectuer les soudures et les câblages : par exemple dans le cas d'un empilement de tôles d'un moteur électrique ou dans le cas d'un transformateur ou de la disposition de jauges à travers des fentes étroites,
- pour l'utilisation d'un grand nombre de jauges, par exemple pour mesurer un gradient de contraintes,
- pour les mesures sur des bords, des arêtes et des congés où les jauges classiques ne peuvent être câblées,
- pour l'utilisation de jauges très étroites qui trouvent leur emploi sur la tranche d'une plaque relativement mince, sur des nervures, sur des très petites lames,
- pour des mesures dans des cavités fermées telles que dans des pneus de voitures ou d'avions ou des cavités dans des ouvrages en béton.

De plus, dans les cas où l'installation est possible, l'installation de ces jauges métalliques coûte cher en fils conducteurs métalliques pour les jonctions électriques et de transmission du signal de déformation et est difficile à cause de l'encombrement important et des multiples connexions nécessaire pour collecter, différencier, identifier et traiter chacune des jauges utilisées sans intervertir deux jauges.

Il se pose donc le problème de trouver un nouveau type de jauge et un nouveau procédé de réalisation d'une jauge permettant notamment de résoudre les problèmes ci-dessus. Les documents WO 2008/059838 A et EP2085253 A décrivent un pneu comportant un capteur et un procédé de mesure du niveau de déformations d'un pneu.

Le document US 2007/0151356 divulgue un appareil de mesure d'une quantité mécanique.

Le document US 2008/0223152 divulgue un procédé et un système de recouvrement d'une surface active pour une évaluation et un contrôle de structure.

Le document US 2006/0216848 divulgue un appareil de mesure de données mécaniques.

Le document US 6148662 divulgue une sonde à haute sensibilité pour mesurer des contraintes.

Le document US 2007/240519 divulgue un appareil de mesure de quantités mécaniques.

## EXPOSÉ DE L'INVENTION

Pour pallier ces problèmes, l'invention concerne un dispositif de mesures de déformation selon la revendication 1.

Des moyens permettent de relier électriquement la jauge et le substrat, à travers la couche élastique.

La jauge comporte une partie métallique et un substrat souple, la partie métallique étant présente sur une face du support souple, l'autre face du support étant destinée à être fixée à, ou mise en contact avec, ou collée à, un corps d'épreuve dont on veut mesurer une déformation. Dans un dispositif selon l'invention, c'est la portion métallique qui est tournée vers une couche élastique et un premier substrat, tandis que le support souple est appliqué contre la surface dont on veut mesurer une déformation.

La couche élastique, disposée entre la jauge et le premier substrat, permet d'absorber tout ou partie d'une déformation à mesurer. La jauge est donc sensible à cette déformation, mais la déformation n'est pas transmise au substrat. Celui-ci ne reçoit que les signaux électriques qui traduisent la déformation et qui sont transmis aux moyens de traitement du signal et/ou moyens de transmission du signal. La présence de la couche élastique permet en outre d'éviter que le substrat limite les déformations de la jauge.

Selon l'invention, les moyens pour assembler mécaniquement la jauge et le premier substrat sont des moyens de solidarisation comportant la couche de matériau ayant des propriétés élastiques disposée entre la jauge et le premier substrat. Par des propriétés élastiques, on entend des propriétés mécaniques, en particulier de déformation élastique, suffisantes pour permettre aux moyens de solidarisation d'absorber des déformations élastiques de la jauge de contrainte sans transmettre, ou en transmettant le moins possible, ces déformations au premier substrat et sans limiter l'étendue de ces déformations dans la jauge de contrainte.

Ainsi, le premier substrat est fixé mécaniquement à la jauge sans en limiter les déformations. On réduit ainsi le risque de limiter ou de bloquer la déformation de la jauge et ainsi de limiter la sensibilité de la jauge.

Par exemple cette couche à propriétés élastiques est en élastomère ou en résine. Elle peut être en polyuréthane ou en un élastomère à base de silicone. Cette couche peut être un film adhésif souple.

D'une manière générale, cette couche :

- a une dureté qui peut être comprise entre 33 et 95 Shore A ou entre 33 et 55 Shore D,
- et/ou a une épaisseur par exemple comprise entre 10 $\mu$m et 200 $\mu$m,
- et/ou a une composition choisie en fonction de la déformation pendant la sollicitation de la jauge et la gamme de température en utilisation pour ne pas limiter la déformation de la jauge ni se dégrader.

Cette couche peut être adhésive ou non dans un dispositif selon l'invention prêt à l'emploi ; en particulier elle peut être en un matériau qui est initialement adhésif et qui, après réticulation ou séchage ou polymérisation, ne comporte plus de propriété adhésive ou de collage hormis avec ce qui était préalablement collé. C'est par exemple un polyuréthane ou un élastomère à base de silicone ou une résine élastomère. Dans la suite de la description on utilisera de façon indifférenciée les termes « film souple » ou « film adhésif » pour décrire les moyens de solidarisation.

Selon l'invention, les données mesurées ne nécessitent pas de câblages externes au dispositif pour être fournies à des moyens de traitement et/ou de transmission RF de données.

Selon une réalisation, les moyens de connexion électrique traversent les moyens pour relier mécaniquement la jauge et le substrat. Par exemple un film ou une couche, qui assemble les deux éléments, est traversée par des connexions électriques.

Ainsi, il n'y a plus de fils à disposer entre une jauge appliquée à un objet ou à une structure et des moyens de traitement des signaux et/ou des moyens de transmission RF de données.

La jauge de contrainte comporte par exemple une piste métallique sur un support généralement souple, qui permet d'être collé à une surface non plane. Dans la suite, par souci de simplification, ce support sera nommé « support souple » sans pour autant limiter l'invention au cas d'un support souple. Lors d'une déformation du corps d'épreuve sur lequel la jauge est fixée, celle-ci subit une déformation qui est transmise par le support souple à la piste métallique et qui en modifie la résistance. Le support souple est tourné vers la structure dont les déformations sont à mesurer et la jauge vers le premier substrat.

Avantageusement, un tel dispositif comporte des moyens de transmission du signal par radiofréquence, de préférence de type RFID. Ainsi, un dispositif selon l'invention est autonome et ne nécessite aucun câblage pour traiter les données et/ou pour transmettre les mesures de déformation. Cela permet éventuellement de disposer un dispositif selon l'invention dans un milieu fermé. En variante, des liaisons filaires permettent de réaliser la transmission.

Un tel dispositif peut comporter en outre des moyens formant antenne pour les moyens de transmission du signal.

Dans un cas particulier, c'est la jauge, comportant une piste métallique, qui forme antenne pour les moyens de transmission du signal. En variante, des moyens formant antenne peuvent être déposés sur le premier ou sur le deuxième substrat.

Dans un dispositif selon l'invention, un deuxième substrat peut être assemblé mécaniquement avec le premier. Par exemple ils sont collés l'un à l'autre, chacun par une de ses faces. Au moins un des substrats peut comporter des moyens de reprise de connexions électriques, par exemple sous la forme d'un chanfrein. Les deux substrats peuvent être reliés électriquement, aux moyens de connexions. Dans un mode de réalisation particulier, ces connexions sont fixées d'un coté sur des extensions de contact formées sur un chanfrein présent sur la face avant du premier circuit ou substrat ou circuit intégré et de l'autre coté sur des plots de contacts présents sur le deuxième substrat ou circuit intégré. L'un des substrats peut comporter au moins une partie des moyens de transmission et l'autre substrat une partie de moyens de traitement du signal.

Chacun des moyens de traitement des données et des moyens de transmission par radiofréquence peut être réalisé sous la forme d'un circuit électronique, intégré au premier substrat ou au deuxième substrat.

Un dispositif selon l'invention peut être associé à des moyens d'alimentation électrique, pour alimenter la jauge et/ou des moyens de traitement et/ou de transmission du signal. Par exemple les moyens de transmission par radiofréquence comportent un dispositif de télé-alimentation par radiofréquence de type RFID. Ils peuvent être confondus avec les moyens de transmission, en particulier de type RF. Ou bien, une pile ou micropile est solidarisée avec la jauge ou avec les moyens de traitement et/ou transmission du signal. Une alimentation par une source externe peut aussi être réalisée. Les moyens d'alimentation électrique peuvent être formés sur le premier ou le deuxième substrat.

L'invention concerne également un procédé de réalisation d'au moins un dispositif de mesures de déformation selon la revendication 11.

Une étape de formation de moyens pour connecter électriquement la jauge et le substrat peut en outre être réalisée.

De préférence, une pluralité de dispositifs de mesure de déformation selon l'invention est réalisée de manière collective. Selon ce procédé de réalisation, on réalise une pluralité de dispositif de mesure selon l'invention sur un même premier substrat, comportant lui-même une pluralité de moyens de traitement du signal et/ou de moyens de transmission du signal, l'étape a) comportant l'assemblage d'une pluralité de jauges de contrainte avec ce premier substrat. Chaque jauge est alors associée à des moyens de traitement du signal et/ou des moyens de transmission du signal.

Une étape d'individualisation de chaque dispositif de mesure peut être réalisée par découpage du premier substrat. Avantageusement, le découpage de l'ensemble des deux substrats a lieu quand un deuxième substrat est déjà collé au premier.

L'étape d'assemblage mécanique peut être réalisée au moyen d'une couche de matériau ayant des propriétés élastiques, déposée par exemple sur le premier substrat. On peut se reporter à ce qui a déjà été décrit ci-dessus concernant cette couche.

L'étape de formation de moyens pour connecter électriquement la jauge et le substrat peut comporter la formation de connexions électriques à travers cette couche.

L'étape d'assemblage mécanique permet d'assembler mécaniquement et de solidariser la jauge et le premier substrat, même si ceci est réalisé par le biais d'une couche présentant une certaine élasticité.

Un deuxième substrat peut en outre être assemblé au premier substrat. Ce deuxième substrat peut lui aussi comporter un ou plusieurs circuits, par exemple un circuit de transmission RF de données. Des connexions électriques peuvent être établies entre ce circuit et un circuit du premier substrat. Des moyens de reprise de connexions électriques peuvent être réalisés sur le premier substrat et/ou sur le deuxième substrat. Des moyens d'alimentation électrique, pour alimenter la jauge et/ou des moyens de traitement et/ou de transmission du signal, peuvent être en outre prévus. Pour ces moyens, on se reportera aux explications déjà données ci-dessus.

L'invention concerne également un procédé de mesure de déformation selon la revendication 15, comportant l'application d'un dispositif de mesure selon l'invention, le support souple, sur lequel la jauge de contrainte est disposée, étant fixé ou collé à la surface dont les déformations sont à mesurer, la couche élastique étant disposée entre la jauge et le premier substrat.

Comme déjà expliqué ci-dessus, c'est donc la couche élastique, disposée entre la jauge et le premier substrat, qui permet d'absorber tout ou partie d'une déformation à mesurer et qui permet de ne pas limiter les déformations de la jauge. Celle-ci est donc plus précise.

## BRÈVE DESCRIPTION DES DESSINS

- Les figures 1A et 1B illustrent une jauge de contrainte pouvant être utilisée dans l'invention,
- les figures 2A et 2B illustrent un dispositif selon deux modes de réalisation de l'invention, comportant un ou au moins deux circuits intégrés,
- les figures 3A à 3E illustrent un premier mode de réalisation d'un procédé selon l'invention,
- la figure 3F représente un dispositif selon l'invention, en position de mesure sur une structure,
- les figures 4A à 4G illustrent un procédé selon un second mode de réalisation de l'invention, les moyens de traitement et/ou transmission du signal comprenant au moins deux circuits intégrés,
- la figure 4H représente un dispositif selon l'invention, en position de mesure sur une structure,
- les figures 5A à 5C représentent différents dispositifs selon l'invention comportant des moyens formant antenne,
- les figures 6A à 6C illustrent un procédé de réalisation de jauges,
- les figures 7A à 7E illustrent un procédé collectif de réalisation de l'invention.

## EXPOSÉ DÉTAILLÉ DE MODES DE RÉALISATION PARTICULIERS

L'invention concerne un dispositif de mesure de déformation ou de contraintes d'un corps d'épreuve. Un signal est prélevé, lors d'une déformation d'une jauge métallique et peut être traité par le dispositif lui-même et éventuellement émis.

Plus particulièrement l'invention concerne notamment une jauge métallique associée à des moyens de traitement du signal émis lors d'une déformation de la jauge.

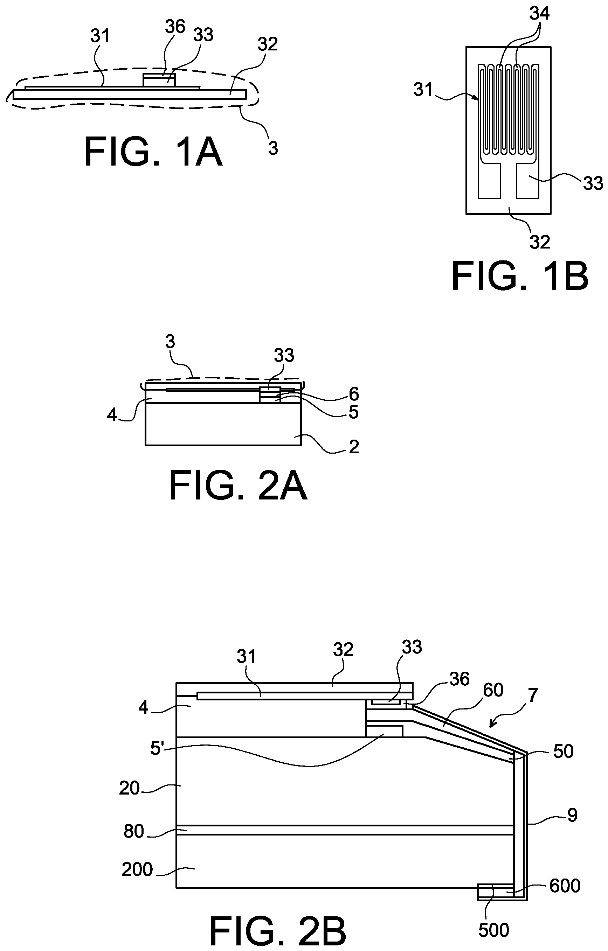

Une jauge métallique qui peut être utilisée dans un dispositif selon l'invention comporte avantageusement une portion métallique 31, composée par exemple de fils métalliques laminés ou tréfilés-collés, présente sur un support souple 32 (figure 1A).

On appelle support souple un support que l'on peut coller à une surface non plane pour en épouser les variations.

La jauge mesure les déformations suivant une direction parallèle à ses fils. Si on veut mesurer des déformations suivant une direction perpendiculaire aux fils, il faut coller une autre jauge, dont les fils seront disposés suivant cette direction perpendiculaire, ou utiliser une jauge en forme de rosette. On peut se reporter, à ce sujet, à l'ouvrage de J.Avril, Encyclopédie d'analyse des contraintes, Micromesures, 1984, par exemple à la page 242 de cet ouvrage.

Le support souple peut être un film plastique ou polymère, par exemple un polyimide de type Upilex S.

Il a avantageusement une épaisseur comprise entre 20 $\mu$m et 70 $\mu$m, mais de préférence entre 20 $\mu$m et 50 $\mu$m : en effet, avec des épaisseurs plus importantes, il existe un risque de perte de la contrainte transmise.

Préférentiellement la portion métallique comporte une piste métallique formant des boucles 34 et au moins deux zones de contact. Sur ces zones de contact sont avantageusement présents des plots de contacts 33 pouvant avoir un niveau, dans une direction perpendiculaire à un plan comprenant la piste métallique, différent de celui de la piste métallique (figure 1A-1B).

Le matériau de la piste métallique est choisi en fonction de la sensibilité aux déformations et des performances voulues pour la jauge en termes d'hystérésis, de fluage, de coefficient de température de la résistance (TCR), de coefficients de température de la sensibilité (TCS). Le matériau choisi est avantageusement un alliage tel que par exemple NiCuMn, ou NiCr ou NiCrSi ou NiCrFe ou PtW.

Des jauges utilisables pour l'invention peuvent être trouvées chez des fabricants tels que SEEA, Vishay ou Scaime.

Les matériaux des jauges permettent des élongations maximales, lors de la sollicitation de la jauge, variables suivant le domaine de mesures visé. Les jauges de hautes performances sont généralement limitées à 1 ou 2% d'élongation (10 ou 20 mm/m). Les jauges d'usage courant, ayant un support souple en polyimide, peuvent avoir une élongation comprise entre 5% et 15%. Les jauges sans support, collées à l'aide d'un ciment céramique, sont limitées à 0,5% d'élongation. Il existe aussi des jauges spécialement conçues pour les grandes élongations, jusqu'à 20 ou 25%.

Dans un dispositif selon l'invention, une jauge de contrainte métallique sur film polymère produit un signal, lors d'une déformation d'une valeur de l'ordre de 0.01 % à 2 %, d'une grande précision, de l'ordre de $10^{-4}$ de la pleine échelle.

Le coefficient de température de la résistance est de préférence proche de 0, typiquement inférieur ou égal en valeur absolue à 5 ppm/°C (donc compris entre - 5 ppm/°C et + 5 ppm/°C) . Précisons que l'on entend par coefficient de température de la résistance CTR la quantité :

$$CTR = \Delta Rx((R1 + R2)/2)^{-1} \ x \ (\Delta T)^{-1},$$

Où :

- R1 est la résistance à la température T1,
- R2 est la résistance à la température T2,
- ΔT = T1 - T2.

De préférence encore, la jauge métallique présente une possibilité de compensation du fluage du corps d'épreuve par un fluage opposé de la jauge, ce qui permet encore d'améliorer la précision de la mesure.

La publication de H. Grange et al., « Thin film strain gauges on polymers : main characteristics », sensors and actuators, A 46-47, 1995, p.213-217 illustre le principe de mesure des différents paramètres (coefficient de température et fluage).

Dans un dispositif selon l'invention, une jauge de contrainte métallique sur film polymère produit un signal, lors d'une déformation d'une valeur de l'ordre de 0.01 % à 10 %, et même jusqu'à 25 %, d'une précision de l'ordre de $10^{-3}$ de la pleine échelle.

De préférence, la jauge de contrainte métallique a une résistance très élevée (par exemple entre 1000 Ω et 5000 Ω), permettant de limiter la consommation.

Dans un mode avantageux de l'invention, il peut y avoir une couche 36 de matériau de soudure (par exemple en InSn ou en SnPb ou en un alliage sans plomb) en contact avec les plots de contact 33 de la jauge de contrainte 3.

Deux modes de réalisations d'un dispositif selon l'invention sont décrits en figures 2A et 2B.

Un premier mode de réalisation d'un dispositif selon l'invention, illustré en figure 2A, comprend une jauge métallique 3 solidarisée avec un substrat 2 comportant des moyens de traitement du signal. Ce substrat 2 peut être du type utilisé dans l'industrie de la microélectronique, il peut en particulier être en matériau semiconducteur.

Les moyens de traitement du signal comportent par exemple un circuit électronique qui réalise les fonctionnalités nécessitées pour la mise en œuvre de ce traitement. Dans un exemple de réalisation, le substrat ou le circuit intégré comportant le circuit électronique de traitement du signal comporte de plus, relié électriquement et électroniquement au dit circuit de traitement du signal, des moyens ou un circuit électronique de transmission du signal, formant un circuit électronique d'émission. De tels moyens de transmission permettent de transmettre des données depuis la jauge vers des moyens extérieurs. Préférentiellement, la transmission du signal est de type par radiofréquences (RF).

Avantageusement, ces moyens de transmission du signal comportent des moyens ou un circuit de type RFID. Les circuits de type RFID permettent de procéder à une téléalimentation, c'est-à-dire une alimentation en énergie au moyen d'ondes électromagnétiques. Il n'est alors pas nécessaire de fournir des moyens d'alimentation électrique supplémentaires, bien qu'il puisse en être prévu pour palier des circonstances ne permettant pas la téléalimentation. Par exemple, une pile peut être associée au dispositif.

La jauge 3 elle même peut servir d'antenne d'émission et/ou de réception pour approvisionner le dispositif en électricité.

Préférentiellement, chacun des circuits électroniques de traitement du signal et de transmission RF du signal est un circuit intégré qui peut être présent à la surface du substrat 2. Il peut y avoir plusieurs circuits à la surface du substrat.

Les moyens de traitement et éventuellement de transmission peuvent être enrobés d'un capot de protection (non représenté), par exemple en silicium ou en résine époxy. Par exemple, un tel capot protège les interconnexions et les transistors composant un circuit électronique, contenu dans ces moyens, contre des dégradations telles que des dégradations chimiques ou dues à des rayonnements électromagnétiques.

Le substrat ou circuit 2 est mécaniquement relié à la jauge 3 grâce à des moyens de solidarisation 4. Des moyens 5, 6 de connexion électrique permettent de transmettre, aux moyens de traitement des données, le signal de la jauge.

De préférence, les moyens de solidarisation 4 ont des propriétés élastiques suffisantes pour ne pas modifier, ou modifier le moins possible, la déformation de la jauge lors d'une sollicitation de cette dernière et pour ne pas transmettre, ou en transmettant le moins possible, la déformation de la jauge au premier substrat. Ces moyens 4 ont en outre des propriétés de duretés et d'adhérence suffisantes pour relier ou assembler mécaniquement la jauge au substrat du circuit. La distance entre la jauge et le substrat 2 est donc sensiblement constante. Elle est en tout cas inférieure à quelques centaines de μm, par exemple inférieure à 100 μm ou à 200 μm. Cette distance est la somme des épaisseurs des couches disposées entre la jauge et le substrat. De préférence cette distance est égale à l'épaisseur des moyens de solidarisation après séchage ou polymérisation et est proche de l'épaisseur déposée du film ou de la couche élastique 4.

Ces moyens 4 comportent préférentiellement un film élastique de 5 μm à 150 μm d'épaisseur, avantageusement comprise entre 10 μm et 130 μm.

De préférence, on utilise, pour les moyens de solidarisation 4, un ou plusieurs matériaux, la dureté de chacun de ces matériaux étant inférieure à 100 Shore A. Le film élastique 4 est par exemple en polyuréthane (PU). American Polyfilm fabrique par exemple des films de TPU (PU thermoplastique) ayant une dureté entre 70 et 95 Shores A. Ces films élastiques ont une excellente élasticité à basse température, ils conservent leur élasticité jusqu'à -50°C. Ces matériaux ont de plus une très grande résistance à la rupture : 4000 à 9500 psi.

Alternativement, le film élastique 4 peut être un élastomère de type silicone. En effet la plage d'utilisation en température des élastomères de type silicone est importante (-60 à + 250 °C), et leur élasticité est élevée (Dureté Shore A : 33 à 80).

Un autre exemple possible de matériau pouvant convenir pour certaines applications de l'invention est une résine, si elle présente des propriétés élastiques telles que décrites précédemment.

Ce peut par exemple être une résine à base de polyuréthane du type NOA65 produite par la société Epotecny.

Le choix du matériau utilisé et de sa composition se fait préférentiellement en fonction de l'élongation maximale en sollicitation de la jauge choisie et des températures auxquelles la jauge sera soumise de façon à ne pas influencer la déformation de la jauge et à conserver une adhésion entre la jauge et les moyens de traitement et/ou transmission du signal.

Du point de vue électrique, des moyens de connexion peuvent être prévus entre la jauge 3 et le substrat ou le circuit 2. Ainsi peuvent être prévus au moins deux plots de soudure 6, situés en contact avec au moins deux plots de contacts 5 présents sur le premier substrat 2. Dans le cas où il y a un capot à la surface du substrat, les plots de contacts 5 traversent le capot et permettent un contact électrique avec le ou les circuit(s) électronique(s). Un exemple d'un tel capot et de la formation de tels plots de contacts 5 peut se trouver dans l'article de H. Grange, et al. : « A Bi-axis Accelerometer with a Chip Size Packaging Technology for a Pacemaker Application » ESSDERC'98 pp.200-203.

Les plots de soudure 6 peuvent être en Indium, ou en InSn ou en SnPb ou en alliage sans plomb.

Les moyens de connexion 5, 6 traversent les moyens de solidarisation 4 et relient électriquement le substrat du circuit 2 et la jauge 3 Il peut y avoir plus de deux ensembles « plots de soudure - plots de contact ».

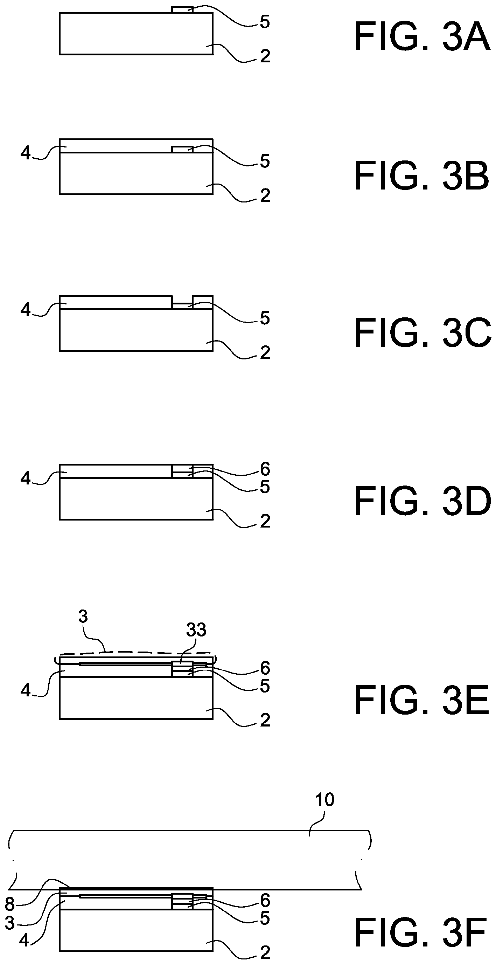

Le dispositif selon l'invention peut être collé sur un corps d'épreuve 10 dont on veut mesurer la déformation ou calculer la contrainte (figure 3F). Ce collage se fait généralement par des moyens de fixation rigides 8, de préférence une colle rigide ayant une grande résistance au cisaillement et une faible élasticité. Alternativement ce peut être une couche de ciment céramique ou tout autre moyen de fixation rigide. Cette couche de colle rigide 8 peut être une couche de type époxyde, par exemple de type M600 ou M610 produites par Vishay, ayant les propriétés de rigidité désirées. Cette couche 8 maintient la jauge de contrainte 3 en contact avec le corps d'épreuve 10 par l'intermédiaire du support souple de la jauge. Cette couche de colle 8, par sa propriété de résistance au cisaillement permet de transmettre les déformations du corps d'épreuve 10 à la jauge 3 avec le minimum de pertes. Cela permet ainsi une déformation maximale, ou une variation de longueur maximale, de la jauge de contrainte 3, qui se déforme proportionnellement à la contrainte appliquée, en compression ou en traction.

Un deuxième mode de réalisation d'un dispositif selon l'invention est illustré en figure 2B.

Comme dans le premier mode de réalisation de dispositif selon l'invention comprend une jauge, par exemple du type décrit ci-dessus, qui est fixée à un premier substrat 20 comprenant au moins des moyens de traitement du signal de la jauge. La jauge 3 et le premier substrat sont reliés par des moyens de solidarisations 4 comme déjà expliqué ci-dessus.

Dans ce mode de réalisation, certaines caractéristiques de la jauge 3 et des moyens de solidarisation 4 sont identiques à celles du premier mode de réalisation de l'invention. Elles sont donc présentées en figure 2B par les mêmes références. On peut se reporter à la description ci-dessus en ce qui les concerne.

Dans ce mode de réalisation, est prévu au moins un deuxième substrat ou circuit intégré, 200 différent du premier substrat 20. Avantageusement, l'un des substrats ou circuits intégrés contient au moins une partie des moyens de transmission par radiofréquence et l'autre contient les moyens de traitement du signal.

Dans un cas où le premier substrat contient des moyens de traitement du signal émis lors d'une sollicitation de la jauge, le deuxième substrat 200 comporte des moyens de transmission du signal.

Le premier substrat 20 comporte deux faces principales, la première contenant par exemple un circuit électronique et la deuxième étant vierge de circuit électronique, pouvant par exemple être en silicium. La première face est tournée vers la jauge, la deuxième face est sensiblement parallèle à la première et lui est opposée. En outre, le substrat 20 peut comporter des moyens permettant une reprise des connexions électriques sur un des cotés de la première face. Par exemple, sur un des cotés de la première face, le premier substrat 20 comporte un chanfrein 7, formant un angle tel que l'épaisseur du substrat soit plus faible près du bord extérieur comportant le chanfrein qu'à l'intérieur ou au centre du substrat 20.

Sur le chanfrein 7 peuvent être présents des moyens de connexion, par exemple des pistes ou extensions métalliques 50 reliées au circuit électronique contenu dans le substrat 20 au moyen de plots de contacts 5' traversant l'éventuel capot. Sur ces pistes 50 peut être disposée une ou des couche (s) de matériau de soudure 60.

Avantageusement les circuits électroniques présents dans chacun des circuits intégrés 20, 200 peuvent être enrobés dans un capot, par exemple en silicium ou en résine époxy, qui protège les interconnexions composant les circuits électroniques contre des dégradations chimiques ou dues à des rayonnements électromagnétiques. Alors le chanfrein 7 est formé dans le matériau du capot, ne dégradant pas le circuit électronique présent sous le capot.

Le deuxième substrat ou circuit intégré 200 présente deux faces, l'une, dite première face, contenant un circuit électronique, cette première face peut être recouverte d'un capot et peut présenter des plots de contact 500. L'autre face, dite deuxième face, est vierge de circuits intégrés. Les deux faces vierges, ou secondes faces, des deux circuits intégrés 20, 200 sont fixées ensemble par des moyens de fixation 80. Ces moyens de fixation 80 comportent avantageusement une couche ou une colle souple ou rigide (car elle ne joue pas de rôle particulier dans la mesure d'une contrainte), par exemple de type Vishay M610 ou un ciment céramique ou tout autre moyen de fixation.

De plus, des plots de contacts 500 du deuxième substrat 200 sont avantageusement recouverts individuellement par une épaisseur de matériau de soudure 600, qui forme couche conductrice. Par l'intermédiaire de cette épaisseur de matériau de soudure, les plots de contact 500 du second substrat ou circuit intégré sont reliés électriquement par des moyens de connexion ou raccords 9 à des moyens de connexion électrique du premier substrat, par exemple au matériau de soudure 60 présent sur chaque extension de contact 50 présente sur le chanfrein 7 du premier substrat 20.

Ce second mode de réalisation d'un dispositif selon l'invention peut lui aussi être fixé sur un corps d'épreuve, dont on veut mesurer la déformation, avec des moyens de fixation rigides 8 tels que décrits précédemment, par exemple une colle rigide ayant une grande résistance au cisaillement, du type M610 produite par Vishay.

Un dispositif selon l'invention, quel qu'en soit le mode de réalisation, peut comporter ou être connecté à des moyens d'alimentation ; par exemple il est relié, via une connexion au moyen de fils électriques, à un réseau électrique ou une batterie située à l'extérieur du dispositif. En variante, une pile ou une micropile peut être fixée ou intégrée au dispositif.

Cependant, de façon avantageuse, les moyens d'alimentation comportent des moyens de télé-alimentation par radiofréquence. Dans ce cas là, des moyens de transmission du signal par radiofréquence sont prévus, préférentiellement du type RFID et ces moyens combinent les fonctions de moyens de télé-alimentation et de moyens de transmission du signal.

De même, dans chacun des deux modes de réalisation précités une antenne peut être reliée aux moyens de transmission du signal. L'antenne est préférentiellement une grille conductrice électriquement qui peut être comprise sur ou dans un des circuits électroniques ou sur la jauge 3. Avantageusement, la piste métallique 31 de la jauge de contrainte 3 sert d'antenne, et elle est reliée de façon appropriée aux moyens de transmission du signal par des plots de contacts. Ces plots de contacts peuvent être ceux formant le contact électrique entre la jauge et le premier substrat ou peuvent être d'autres plots de contact.

Dans le cas où l'antenne est comprise sur le deuxième substrat 200, la grille conductrice formant antenne est avantageusement en contact avec l'air.

En variante, l'antenne peut être constituée du corps d'épreuve 10 si celui-ci est métallique et n'est relié à aucune autre source de courant.

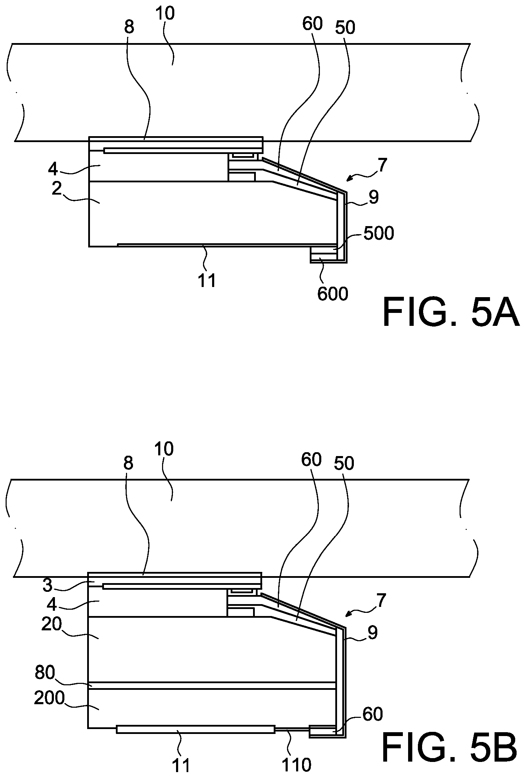

Des dispositifs selon l'invention et comportant des moyens formant antenne sont illustrés en figures 5A à 5C. Dans ces figures, chaque dispositif est relié à un corps d'épreuve 10.

Dans le cas illustré par la figure 5A, une couche métallique 11 forme antenne, elle est collée sur la face vierge du premier substrat 2, du côté opposé à la jauge. Des plots de contacts 500 sont disposés sur la couche métallique 11. Le premier substrat 2 comporte deux faces principales, la première contenant par exemple un circuit électronique et la deuxième étant vierge de circuit électronique, pouvant par exemple être en silicium. La première face est tournée vers la jauge, la deuxième face est sensiblement parallèle à la première et lui est opposée. En outre, ce substrat 2 peut comporter des moyens permettant une reprise des connexions électriques sur un des cotés de la première face. Par exemple, sur un des cotés de la première face, le premier substrat 2 comporte un chanfrein 7, formant un angle tel que l'épaisseur du substrat soit plus faible près du bord extérieur comportant le chanfrein qu'à l'intérieur ou au centre du substrat 2.

Sur le chanfrein 7 peuvent être présents des moyens de connexion, par exemple des pistes ou extensions métalliques 50 reliées au circuit électronique contenu dans le substrat 20 au moyen de plots de contacts 5' traversant l'éventuel capot. Sur ces pistes 50 peut être disposée une ou des couche (s) de matériau de soudure 60. Une épaisseur de matériau de soudure 600 forme couche conductrice.

Par l'intermédiaire de cette épaisseur de matériau de soudure, les plots de contact 500 de l'antenne sont reliés électriquement par des moyens de connexion ou raccords 9 à des moyens de connexion électrique du premier substrat, par exemple au matériau de soudure 60 présent sur chaque extension de contact 50 présente sur le chanfrein 7 du substrat 2.

Un même matériau de soudure peut avantageusement former chacune des couches en matériau de soudure du dispositif selon l'invention : 6, 36, 60, 600.

Le cas illustré par la figure 5B est celui d'un dispositif comportant deux substrats 20, 200, du type déjà décrit ci-dessus avec la figure 2B. Une couche métallique 11 formant antenne est de plus disposée sur la face du second substrat 200 qui n'est pas collée au premier substrat 2. Cette couche métallique est reliée aux plots de contact 500 présents sur le deuxième substrat au moyen d'extensions conductrices 110 pouvant faire partie de la couche métallique 11. Le second substrat 200 peut comporter ou non un circuit électronique.

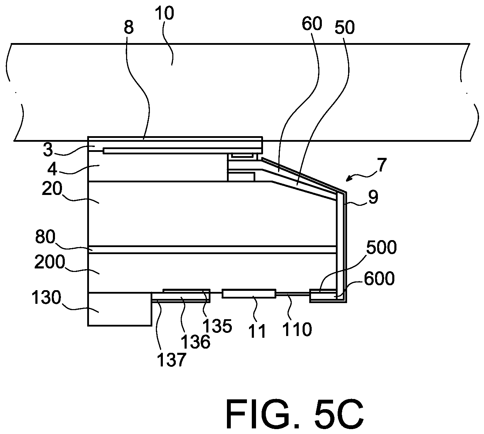

Le dispositif illustré en figure 5C est un dispositif comparable à celui illustré en figure 5B, comprenant de plus une micropile 130 positionnée sur la face du second substrat 200 qui n'est pas collée avec le premier substrat 20. Cette micropile 130 est solidarisée avec le second substrat 200. Elle peut être de plus reliée électriquement au second substrat 200, par exemple au moyen d'extensions conductrices 137 reliées à la micropile 130. Ces extensions 137 peuvent être solidarisées électriquement avec des plots de contact 135, présents sur le substrat 200, par exemple par une couche de matériau à faible température de fusion 136.

Il est également possible de positionner une micropile au dos d'un dispositif selon le premier mode de réalisation de l'invention, par exemple dans le mode de réalisation décrit ci-dessus avec la figure 5A.

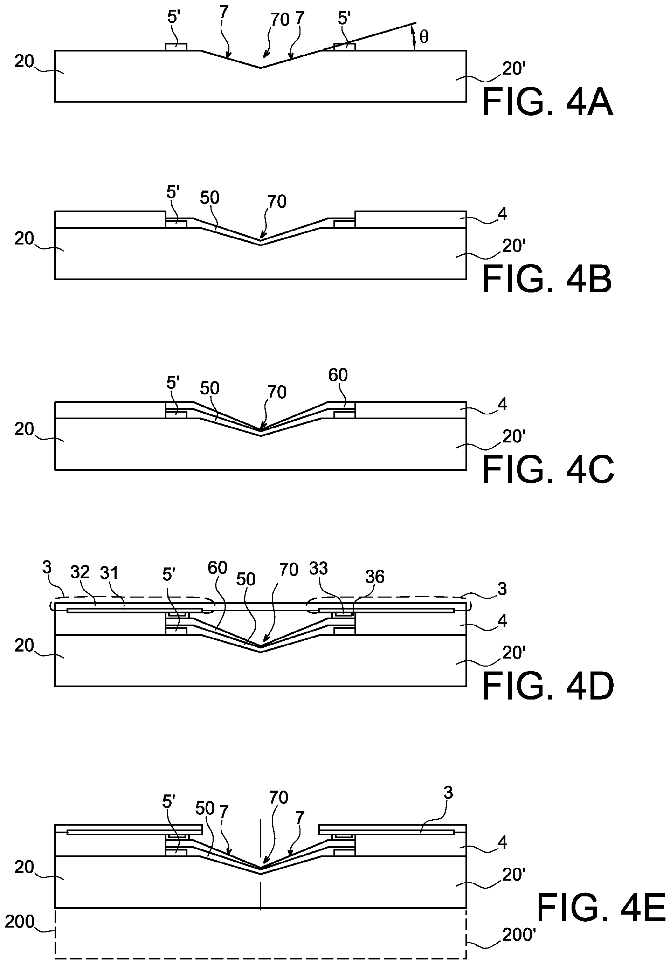

L'invention concerne aussi des procédés de réalisation d'un dispositif selon l'invention. Ces procédés sont illustrés en figures 3A-3E et 4A-4G.

Le premier procédé selon l'invention, illustré en figures 3A à 3E, concerne un procédé de réalisation d'un dispositif selon le premier mode de réalisation, illustré en figure 2A.

En premier lieu est choisi un circuit intégré 2, comportant au moins des moyens de traitement du signal et, par exemple, des moyens de transmission du signal par radiofréquence. Ces moyens sont, par exemple, sous la forme d'au moins un circuit électronique compris dans un circuit intégré ou sur un substrat et sont munis d'au moins deux plots de contacts 5 (figure 3A). Chaque plot est par exemple réalisé par dépôt successif de chrome, de nickel, et d'or, par exemple respectivement avec une épaisseur de 10 nm, 300 nm, et 100 nm.

Sur la face du circuit intégré 2 comportant les plots de contacts 5 est déposée une couche de film souple adhésif 4 ayant des propriétés élastiques, dont les caractéristiques techniques après collage sont telles que décrites précédemment (figure 3B).

Ce film 4 peut être déposé en spray ou de préférence par dépôt à la tournette (spin-coating). Il peut être composé de réticulants fonctionnels et d'un catalyseur, réticulant à température ambiante, par exemple dans le cas d'un film silicone ou ce peut être un film réticulant ou s'organisant par séchage à température ambiante ou par cuisson, par exemple à 150°C. Ce peut être un film silicone, ou un polyuréthane ou une résine photosensible ayant des propriétés élastomères.

De préférence, on utilise une technique de dépôt de type « spin coating » pour le dépôt d'une couche 4 en polyuréthane ou une technique de type « spray » pour le dépôt d'une couche en silicone. Cette étape peut être suivie d'une polymérisation. La surface adhérente supérieure du film élastique 4 peut être protégée par un film de protection pelliculable : plus précisément, un film très mince peut être mis en surface de la couche adhésive pour protéger ses propriétés d'adhérence pendant les étapes suivantes de dépôt de résine, photolithographie, gravure de la couche 4 et dépôt du matériau de soudure 6. Ce film pourra être retiré avant collage de la jauge 3.

La couche 4 est ensuite soumise à une étape de photolithographie (figure 3C), comprenant un dépôt de résine, une insolation et une gravure du film adhésif 4 présent sous la partie de la résine qui a été éliminée. Cette étape permet de mettre à jour les plots de contact 5 présents sous le film adhésif 4.

Ensuite un matériau de soudure 6 est déposé dans les ouvertures formées dans le film adhésif 4, en contact avec les plots de contact 5 (figure 3D).

Ce matériau de soudure est un matériau conducteur à basse température de fusion (T°f), avec une température de fusion inférieure à 350°C ou 200°C. Ce peut être une couche en Indium, ou en InSn ou en SnPb ou en alliage sans plomb, en particulier en Indium50%-Etain50% (T°f = 115 °C) ou Etain63%-Plomb37% (T°f = 183°C). Ce matériau de soudure 6 peut être mis en place au moyen d'un trempage dans un bain de soudure fondue (« Dip soldering » ou « molten solder bath ») ou par « Flip Chip » (pour un dépôt de microbilles en alliage fusible) en rajoutant un niveau de métallisation et de photolithographie pour définir des zones de croissance électrolytique, ou encore en utilisant une machine de dépôt (« Solder bail »). La soudure In-Sn est avantageusement utilisée du fait de son point de fusion plus bas que les autres matériaux de soudure.

Par ailleurs est préparée une jauge de contrainte 3 comportant une piste métallique 31 présente sur un support souple 32 et des plots de contact 33, telle que décrite plus haut, en liaison par exemple avec la figure 1A.

Avantageusement, une couche de matériau de soudure 36 peut être déposée sur les plots de contact de la jauge de contrainte 3. Ce peut être par exemple le même matériau de soudure que celui déposé dans les ouvertures formées dans le film adhésif, en contact avec les plots de contact, sur le circuit intégré.

La jauge de contrainte 3 est ensuite mise en contact avec le film adhésif 4, la face contenant la piste métallique étant en contact avec le film adhésif, les plots de contact 33 de la jauge étant en contact avec le matériau de soudure 6 (figure 3E).

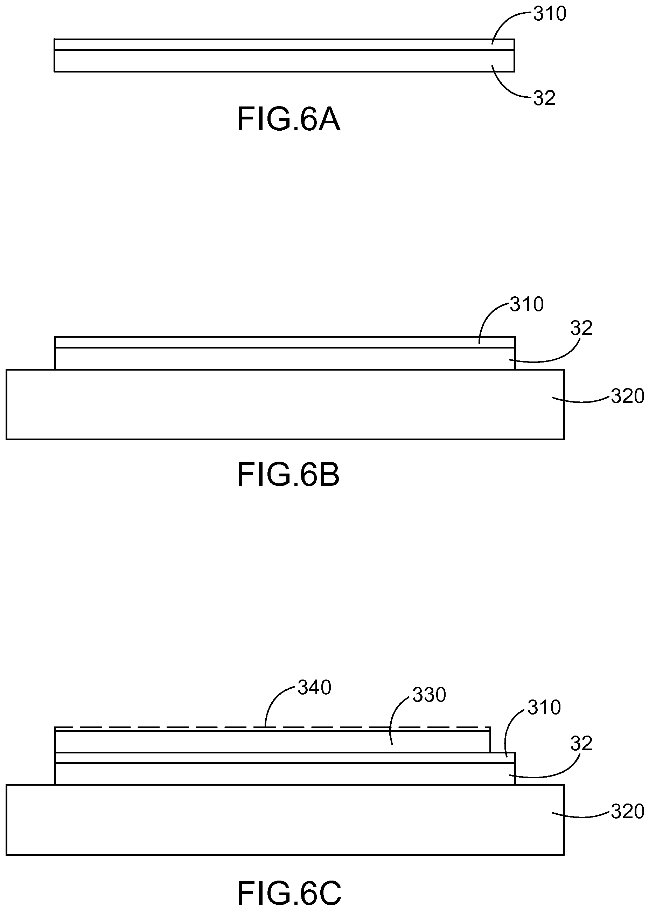

Par exemple, une pression comprise entre 0,5 bar et 3 bars peut être appliquée sur le support souple 32 de la jauge métallique 3 de façon à parfaire le collage. En variante, un plaquage homogène du film de la jauge métallique sur le film 4 peut être réalisé par ensachage sous vide, comme décrit plus loin en liaison avec les figures 6A - 6C.

Avantageusement, une étape de chauffage peut être réalisée, par exemple simultanément à l'étape de mise sous pression. Cette étape de chauffage est adaptée aux matériaux utilisés. De préférence, la température de l'étape de chauffage est inférieure à la température de dégradation du film adhésif 4 et proche ou supérieure à la température de fusion du matériau de soudure 6. Avantageusement, la température de l'étape de chauffage est supérieure à, et proche de, la température de réticulation ou de polymérisation ou de séchage du film adhésif. Avantageusement cette étape de chauffage permet de réticuler ou sécher le film adhésif, de façon à avoir une bonne qualité de collage.

Cette étape permet de plus de ramollir et/ou faire fondre les couches en matériau de soudure, 6, 36, de façon à avoir de bons contacts électriques entre les plots de contact 5 du circuit intégré 2 et les plots de contact 33 de la jauge de contrainte 3. Elle peut être faite sous pression, par exemple un bar ou quelques bars, de façon à parfaire les prises de contact. Avantageusement, si l'étape de chauffage est réalisée sous pression, comme indiqué ci-dessus, il suffit d'atteindre la température de ramollissement du matériau de soudure, 6, 36 et 60 pour obtenir une bonne soudure entre les plots de contact 5, 33. Ceci évite ou limite les risques d'étalement de la soudure des plots de contact, et de court-circuits. Selon un exemple, la température atteinte lors de cette étape de chauffage est d'environ 115° C. Un bon contact électrique est d'autant plus favorisé que les matériaux des deux de contact sont identiques ; de préférence, le matériau de soudure 6 est donc identique au matériau de soudure 36 de la jauge.

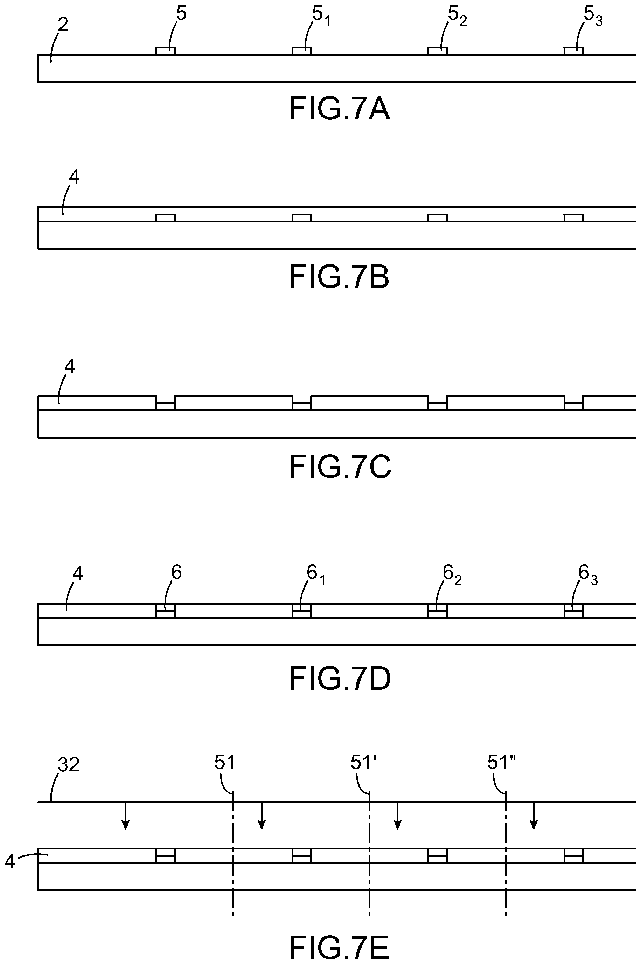

Lorsqu'une pluralité de dispositifs selon l'invention sont réalisés de manière collective sur un substrat commun, comme expliqué ci-dessous en liaison avec les figures 7A -7E, une étape supplémentaire de découpe permet d'individualiser chacun des dispositifs élémentaires.

Ensuite, le dispositif ainsi formé peut être fixé sur un corps d'épreuve 10 dont on veut mesurer la déformation (figure 3F). Pour cette étape sont utilisés des moyens de fixation rigides 8 tel que décrits plus haut. Si les moyens de fixation 8 sont composés d'une colle ou un film adhésif, il est alors préférentiellement appliqué une pression comprise entre 1 bar et 3 bars et une température correspondante à la température indiquée par le fabricant des moyens de fixation : par exemple 112 °C pendant 3 h ou 140 °C pendant 2 heures. La colle utilisée a de préférence une très bonne résistance au cisaillement, c'est par exemple la colle de type Vishay M610.

Un deuxième procédé selon l'invention est illustré en figures 4A à 4G. Un tel procédé permet notamment de réaliser un dispositif selon le deuxième mode de réalisation de l'invention, comportant des moyens de transmission par radiofréquence et de moyens de traitement du signal.

Selon ce deuxième procédé on peut réaliser des moyens de reprise de connexions électriques sur le substrat associé à la jauge, en particulier sous la forme d'un chanfrein.

Dans le cas de moyens de transmission par radiofréquence et de moyens de traitement du signal compris sur des substrats différents, il y a en général au moins deux circuits intégrés, un premier circuit intégré et un second circuit intégré, pouvant être protégés par des capots de protection tels que décrit précédemment. L'un de ces circuits intégrés contient au moins un circuit électronique apte à former des moyens de transmission du signal et au moins un second circuit intégré contient au moins un circuit électronique apte à former des moyens de traitement du signal.

Dans un mode préférentiel de ce mode de réalisation, les moyens de traitement du signal sont compris dans le premier circuit intégré. Cependant, selon une variante, les moyens de traitement du signal peuvent être compris dans le second circuit et les moyens de transmission peuvent alors être compris dans le premier circuit intégré. La suite de la description concerne ces deux variantes du procédé.

De plus, le premier circuit intégré choisi peut être seul ou présent sur une plaquette de matériau semi-conducteur, entouré par d'autres circuits intégrés identiques. La description qui suit présente cette variante du procédé.

Une plaquette en matériau semi-conducteur, contenant des premiers circuits intégrés 20, 20', contenant des moyens de traitement du signal aptes à traiter le signal émis par une jauge de contrainte 3 lors de sa sollicitation, est réalisée. En fait, les circuits sont réalisés de manière symétrique par rapport à un plan perpendiculaire au plan du substrat ou de la plaquette, et perpendiculaire au plan de la figure 4A. Ces circuits intégrés sont avantageusement recouverts d'un capot et comportent des plots de contacts 5' apparents traversant le capot, reliés au circuit électronique. Là encore, les plots d'un circuit sont symétriques des plots de l'autre circuit par rapport au plan déjà mentionné ci-dessus. Un exemple de composition des plots (par dépôt de chrome, de nickel et d'or) à déjà été donné ci-dessus et peut être utilisé pour la présente variante, par exemple avec les épaisseurs déjà mentionnées.

Précédant le dépôt du film adhésif 4 sur le premier circuit intégré 20, un des côtés du circuit intégré peut être soumis à une abrasion 70 selon un angle θ par rapport à un plan constitué de la surface des circuits intégrés, de façon à former un chanfrein 7 ou un plan incliné par rapport à cette surface des circuits intégrés (figure 4A). Ce côté formera avantageusement une des arêtes de la première face du substrat, contenant le circuit électronique et des plots de contact 5' reliés à ce circuit électronique.

Cette abrasion est effectuée entre deux premiers circuits intégrés de façon à ne détériorer ni les circuits électroniques, ici des moyens de traitement du signal, ni les plots de contact 5', cette abrasion est donc symétrique pour deux circuits intégrés voisins. Cette abrasion peut être réalisée par meulage mécanique avec une meule en forme de biseau, dite aussi « meule en V ».

Ensuite, une couche de matériau métallique est déposée sur les premiers circuits, formant des extensions de contact 50 sur les côtés du chanfrein 7.

Ces extensions sont connectées au circuit électronique en ses différents plots de contact 5' sans les connecter entre eux. Puis, a lieu le dépôt d'un film adhésif 4, suivi d'une photolithographie de ce film mettant le chanfrein 7 à jour. Les propriétés du film adhésif 4 sont identiques à celles décrites précédemment (figure 4B). Les aspects déjà décrits ci-dessus en liaison avec la figure 3B peuvent être appliqués à la présente variante.

Ensuite, sur les extensions de contact 50 est déposée une épaisseur de matériau de soudure 60 du même type que présenté ci-dessus (figure 4C). Cette couche de matériau de soudure 60 ne connecte pas les extensions de contact 50 entre elles. Les aspects déjà décrits ci-dessus en liaison avec la figure 3D peuvent être appliqués à la présente variante.

Puis, un système comprenant au moins une jauge de contrainte 3, telle que décrite dans les modes de réalisation précédents, est déposé sur les premiers circuits intégrés 20. En particulier, la plaquette de matériau semi-conducteur peut contenir un ou plusieurs premiers circuits intégrés tels que présentés précédemment. Dans le cas de plusieurs circuits, chacun étant destiné à une jauge, le système de jauges de contrainte 3 comporte avantageusement autant de jauges de contraintes que de premiers circuits intégrés 20 ; ces jauges sont alors par exemple reliées entre elles par leurs supports souples 32. Les jauges 3 sont déposées et collées, sur la plaquette contenant le ou les circuits intégrés, de façon à avoir leurs plots de contact 33 respectifs, et l'éventuelle couche de matériau de soudure 36 qui les recouvre, en contact avec le matériau de soudure 60 (figure 4D) présent au dessus des plots de contact 5'. Aucune partie des jauges n'est en contact avec le matériau de soudure présent sur le chanfrein. Les plots de contact 33 des jauges sont uniquement en contact avec le matériau de soudure 60 situé à l'aplomb des plots de contact 5' des circuits intégrés.

Par exemple, une pression comprise entre 0,5 bar et 3 bars peut être appliquée sur le support souple 32 de la jauge métallique 3 de façon à parfaire le collage. Avantageusement, une étape de chauffage peut être réalisée, par exemple simultanément à l'étape de mise sous pression.

Cette étape de chauffage est adaptée aux matériaux utilisés. De préférence, la température de l'étape de chauffage est inférieure à la température de dégradation du film adhésif 4 et proche de la température de fusion du matériau de soudure 6. Avantageusement, la température de l'étape de chauffage est supérieure à, et proche de, la température de réticulation ou de polymérisation ou de séchage du film adhésif 4. L'étape de chauffage permet de réticuler ou sécher le film adhésif 4 de façon à avoir une bonne qualité de collage. Elle permet de plus de ramollir et/ou faire fondre les couches en matériau de soudure 60, 36, de façon à avoir de bons contacts électriques entre les plots de contact 5' du circuit intégré et les plots de contact 33 de la jauge de contrainte 3. Préférentiellement, l'étape de chauffage étant réalisée sous pression, sa température atteint la température de ramollissement du matériau de soudure, 6, 36, 60. Cela est suffisant pour obtenir une bonne soudure entre les plots de contact et cela évite ou limite les risques d'étalement de la soudure des plots de contact, et de court-circuit.

Les aspects déjà décrits ci-dessus en liaison avec la figure 3E peuvent être appliqués à la présente variante.

Ensuite, a lieu une étape pour dégager l'accès aux chanfreins 7. Cela se fait en éliminant la portion du système de jauges 3, en particulier la portion de support souple 32, qui est située au dessus de la partie abrasée 70 formant les chanfreins 7 (figure 4E). Cela peut être obtenu par des étapes de photolithographie et de gravure localisées ou par une étape de découpe mécanique, par exemple au scalpel, qui est plus simple qu'une photolithographie.

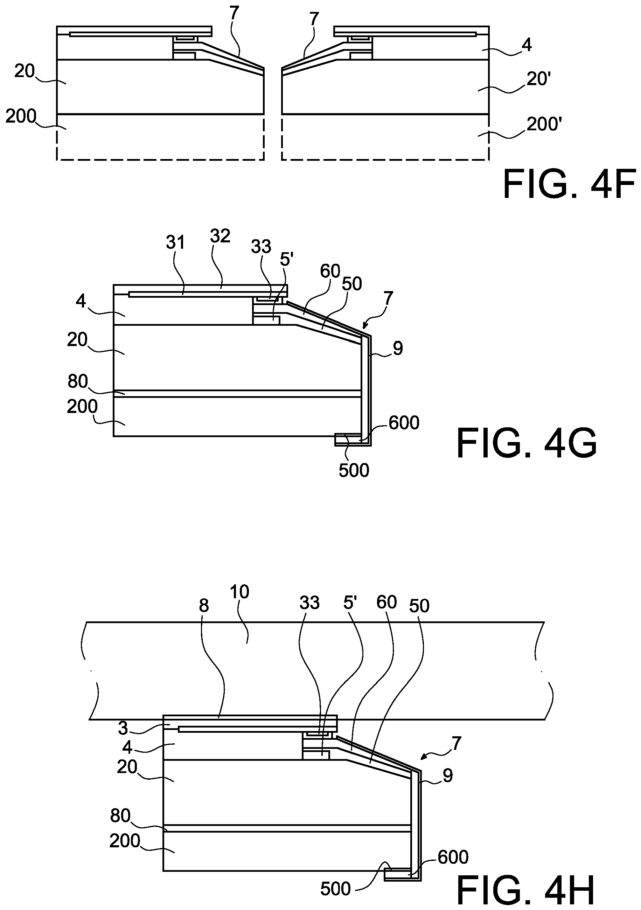

Puis, il peut être procédé à une étape de séparation des différents premiers circuits 20 (figure 4F), par la partie qui relie les chanfreins 7, entre deux systèmes constitués chacun d'un circuit et d'une jauge. Cette étape peut être faite par exemple par découpe laser ou mécanique. Préférentiellement cette étape de séparation est faite au moyen d'une découpe mécanique avec une scie diamantée et guidage laser. Là encore, dans le cas de dispositifs selon l'invention réalisés de manière collective sur un substrat commun, on procède à une individualisation de chaque dispositif comme décrit ci-dessous en liaison avec la figure 7E.

Si on souhaite réaliser des dispositifs comportant un deuxième circuit 200, par exemple comme celui de la figure 2B, alors on procède de la manière suivante : avant individualisation de chaque dispositif on assemble, avec la première plaquette contenant les premiers circuits 20, 20', une deuxième plaquette 200, 200' (représentée en traits interrompus sur la figure 4E). Cette deuxième plaquette contient les moyens électroniques permettant de réaliser des moyens de traitement et/ou de transmission du signal ou ceux, parmi les moyens de traitement du signal et les moyens de transmission du signal par radio fréquence, qui ne sont pas présents dans les premiers circuits intégrés. De préférence cette deuxième plaquette est déjà munie de plots de soudure 500 (voir figure 2B).

Ce deuxième circuit intégré 200 comprend une face avant et une face arrière, la face avant étant définie comme celle comprenant des plots de contact 500. Sur ces plots est déposée une couche de matériau de soudure 600. Le deuxième circuit intégré peut comprendre un capot qui recouvre le ou les circuits électroniques donnant la fonctionnalité de traitement du signal ou de transmission du signal.

La deuxième plaquette 200, 200' est fixée à la première 20,20' par sa face arrière. La face avant de la première plaquette 20, 20' est recouverte par la jauge de contrainte 3, les deux circuits intégrés 20, 20' et 200, 200' sont fixés par leurs faces arrières.

Avantageusement les circuits 20, 20', 200, 200' sont fixés par des moyens 80 de fixation rigides ou souples. Ils peuvent comporter une colle rigide ou un ciment céramique tel que ceux utilisés pour fixer les jauges de contraintes sur les corps d'épreuve, ou encore une colle souple.

Cette étape de fixation peut être complétée par une mise sous pression. La température utilisée pour durcir, ou réticuler la colle utilisée pour cette fixation ne dépasse avantageusement pas la température de fusion des matériaux de soudure utilisés.

Puis, il peut être procédé à une étape de séparation des différents premiers circuits 20 (figure 4F), par la partie qui relie les chanfreins 7, entre deux systèmes constitués chacun d'un circuit et d'une jauge. Cette étape peut être faite par exemple par découpe laser ou mécanique. Préférentiellement cette étape de séparation est faite au moyen d'une découpe mécanique avec une scie diamantée et guidage laser. Là encore, dans le cas de dispositifs selon l'invention réalisés de manière collective sur un substrat commun, on procède à une individualisation de chaque dispositif comme décrit ci-dessous en liaison avec la figure 7E.

Ensuite des raccords 9, conducteurs, sont positionnés, en contact d'un côté avec le matériau de soudure 60 recouvrant les extensions de contact 50 présentes sur le chanfrein 7 et de l'autre coté en contact avec la couche de matériau de soudure 600 présente sur les plots de contacts 500 du second circuit intégré (figure 4G). Cette étape est suivie par une étape de soudure des raccords 9 sur respectivement les plots de contacts 500 du second circuit intégré et les extensions de contact 50 présentes sur le chanfrein 7 du premier circuit intégré 20 au moyen des couches en matériau de soudure 60, 600 qui les recouvrent.

Un dispositif ainsi formé peut être fixé sur un corps d'épreuve 10 dont on veut mesurer la déformation (figure 4H). Pour cette étape sont utilisés des moyens de fixation rigides 8 tels que décrit plus haut. Si les moyens de fixation 8 sont composés d'une colle ou d'un film adhésif, sont alors appliquées une pression comprise entre 1 bar et 3 bars et une température correspondante à la température indiquée par le fabricant des moyens de fixation : par exemple 112 °C pendant 3 h ou 140 °C pendant 2 heures. Cette température est préférentiellement choisie pour être inférieure à la température de fusion des matériaux de soudure utilisés. L'exemple de colle déjà donnée ci-dessus dans le cas de la description de la figure 3F peut être repris dans le cadre de la présente variante.

On peut également procéder dans un ordre différent, c'est-à-dire fixer, sur le corps d'épreuve 10, un dispositif obtenu à l'issue de l'étape décrite ci-dessus en liaison avec la figure 4F, puis assembler, en face arrière de ce dispositif, le deuxième circuit 200. Les éléments conducteurs 9 peuvent alors être formés sur cet ensemble. Mais, comme indiqué précédemment, le circuit 200 sera préférentiellement assemblé avec le circuit 20 avant découpe des assemblages unitaires. Les éléments conducteurs 9 peuvent être réalisés avant ou après le collage de l'ensemble sur le corps d'épreuve.

Chacun des modes de réalisation d'un dispositif selon l'invention peut être réalisé de manière collective sur un substrat semi-conducteur de diamètre 100 mm, ou 200 mm ou 300 mm pour obtenir plusieurs centaines ou milliers de composants unitaires sur le même support qui sont découpés unitairement en fin de fabrication.

Un procédé pour réaliser une ou des jauges métalliques sur un support souple, par exemple de diamètre 100 mm, ou 200 mm ou 300 mm peut être le suivant.

Comme illustré en figure 6A, les jauges sont réalisées par collage d'un film laminé 310 ou par dépôt sous vide en pulvérisation cathodique d'alliage métallique sur un film 32, par exemple d'épaisseur comprise entre 25 $\mu$m et 50 $\mu$m. Une géométrie des résistances est par exemple celle de la figure 1B, du type fils en parallèles reliés par des boucles 34 à leurs extrémités. Une telle jauge peut être réalisée par photolithographie et gravure chimique ou usinage ionique. Les plots de contacts 33 sont par exemple en CrNiAu. Ils peuvent être déposés et gravés par photolithographie et gravure chimique ou usinage ionique ou par dépôt en évaporation sous vide à travers un masque dur métallique.

Après dépôt de la couche métallique 310 sur un film 32, par exemple en matériau polymère, celui-ci est plaqué sur un support rigide 320 (figure 6B) en verre ou silicium, sur lequel il est maintenu en plusieurs points par des petites bandes adhésives ou par du scotch double face (entre polymère et support rigide).

On peut alors procéder à un dépôt d'une résine 330 (figure 6C). L'ensemble est ensuite mis en étuve pour le séchage de la résine (à 90 °C par exemple).

Un masque 340 définissant les dessins des différentes jauges est ensuite plaqué sur le film polymère (figure 6C) par exemple par l'intermédiaire d'un sachet en plastique transparent (non représenté sur les figures) dans lequel on fait le vide avant sa fermeture.

Le masque est réalisé en chrome sur verre. Les géométries de jauge sont en chrome, et le complément est transparent.

Celle-ci est obtenue par soudure des parois du sachet par l'intermédiaire d'une résistante chauffante. Le vide permet de plaquer le masque sur le film métallique ce qui favorise une insolation précise de la résine, suivant les motifs dessinés sur le masque.

Le sachet plastique est ensuite retiré pour développement de la résine et gravure des résistances. La technique de gravure utilisée peut-être une gravure sèche, ou une gravure chimique en milieu liquide.

L'ensemble des jauges sur leur substrat support souple 32 est ensuite séparé du substrat 320.

On peut ainsi obtenir une structure de jauge telle que celle représentée en figures 1A et 1B. Ce procédé a été utilisé pour réaliser un ensemble de jauges métalliques sur un support souple 32 commun. Des caractéristiques des jauges métalliques sur le support souple par exemple décrite dans le document de H. Grange et al., « Thin film strain gauges on polymers : main characteristics », sensors and actuators, A 46-47, 1995, p.213-217.

Les étapes suivantes peuvent être mises en oeuvre pour réaliser collectivement des dispositifs selon l'invention, notamment en combinaison avec une réalisation collective de jauges telle que décrite ci-dessus. Cette succession d'étapes est particulièrement bien adaptée pour une réalisation collective sur un substrat, par exemple en silicium, pouvant être de diamètre 100 mm, ou 200 mm ou 300 mm, comme déjà indiqué ci-dessus. Ces étapes sont décrites en reprenant des éléments des figures précédentes, et les références numériques correspondantes de ces figures, pour ces mêmes éléments. Des caractéristiques ou des étapes décrites ci-dessous peuvent être combinées avec des étapes de procédé déjà décrites ci-dessus. Le mode de réalisation représenté sur les figures 7A - 7E ci-dessous est dérivé de ce qui à été décrit ci-dessus en liaison avec les figures 3A - 3E, mais une même description pourrait être réalisée à partir des figures 4A - 4F.

Partant d'un substrat 2, par exemple de diamètre de 100 mm, on procède d'abord au dépôt, sur ce substrat, d'un film 4 adhésif, élastique de type polyuréthane ou silicone (figures 7A et 7B). Ce film a par exemple une épaisseur comprise entre 20 $\mu$m et 200 $\mu$m. Le substrat comporte ou contient le ou les circuits de mesure de type RFID avec plots métalliques 5, $5_1$, $5_2$, $5_3$... pour les contacts électriques.

On procède ensuite (figure 7C) à une gravure du film 4, en vue de réaliser des ouvertures pour faire apparaître les contacts électriques des différentes jauges.

À cette fin, on procède au dépôt d'une résine, puis à une insolation suivant des motifs d'ouverture définis par un masque et révélation, par un procédé de gravure plasma utilisant par exemple 02, pour permettre l'ouverture, dans le film 4, du passage des interconnexions électriques.

On procède ensuite (figure 7D) au dépôt des interconnexions métalliques 6, $6_1$, $6_2$, $6_3$... par exemple en Indium, ou en InSn ou en SnPb (étain plomb) ou en un alliage sans plomb par trempage dans une soudure fondue (« Dip soldering » ou « molten solder bath ») ou par métallisation à travers un masque dur ou avec une machine de dépôt (« Solder bail ») ou par dépôt de microbilles en alliage fusible.

Les jauges, formées sur le film 32 comme expliqué ci-dessus, peuvent ensuite être collées sur le film 4 (figure 7E). Les connexions entre les plots 33 de contact de chaque jauge (ces plots ne sont pas représentés sur la figure 7E) et les interconnexions métalliques 6, $6_1$, $6_2$, $6_3$... peuvent alors être réalisées. Le collage est réalisé de manière à ce que chaque jauge métallique soit tournée vers le film 4 ou vers une couche d'adhésif déposée sur ce film, et soit donc en contact, soit avec le film 4 lui-même, soit avec cette couche d'adhésif. Cette dernière est choisie de manière à permettre une bonne tenue des jauges et à les empêcher de se déplacer, tout en ne limitant pas la déformation de la grille métallique sous l'effet des contraintes à mesurer.

Il est ensuite possible de procéder à la découpe de puces unitaires, chacune comportant une ou plusieurs jauges de contraintes et au moins un circuit de mesure. La découpe est par exemple réalisée avec une scie diamantée. Les zones de découpe sont représentées schématiquement sur la figure 7E et y sont désignées par les références 51, 51', 51''.

Enfin, on peut coller chaque puce individuellement sur la zone de contrainte à mesurer, comme déjà expliquée ci-dessus en liaison avec les figures 3F, 4H, 5A - 5C.

L'invention s'applique avec avantage dans un certain nombre de cas :

- dans le cas d'une jauge à sorties longues ou lorsqu'il est impossible de disposer, au-dessus du point de positionnement de la jauge, d'un espace suffisant pour effectuer les soudures et les câblages : par exemple dans le cas d'un empilement de tôles d'un moteur électrique ou dans le cas d'un transformateur ou de la disposition de jauges à travers des fentes étroites,
- dans le cas de l'utilisation d'un grand nombre de jauges, par exemple pour mesurer un gradient de contraintes ; dans ce cas, on peut être amené à utiliser 1000 jauges selon l'invention, ou plus,
- pour les mesures sur des bords, des arêtes et des congés où les jauges classiques ne peuvent être câblées,
- pour l'utilisation de jauges très étroites qui trouvent leur emploi sur la tranche d'une plaque relativement mince, sur des nervures, sur des très petites lames,
- pour des mesures dans des cavités fermées telles que dans des pneus de voitures ou d'avions ou des cavités dans des ouvrages en béton.

Egalement une pluralité de jauges selon l'invention peut être appliquée à une aile d'avion, ou à un ouvrage en béton, par exemple un pont ou un barrage ou encore sur d'autres structures (par exemple : ouvrage architectural). Les jauges peuvent alors être au nombre de quelques jauges à plusieurs milliers, par exemple 2000 ou 5000 ou plus. L'invention concerne un système de mesure pouvant comporter au moins une jauge selon l'invention, ou plusieurs centaines ou plusieurs milliers de jauges, par exemple au moins 100 ou 500 ou 1000 ou 50000 ou 10000.

**Revendications**

1. Dispositif de mesures de déformation comprenant :

a) au moins une jauge de contrainte (3), produisant un signal lors d'une déformation, ladite jauge de contrainte (3) comportant une portion métallique (31) et un support souple (32), ladite portion métallique (31) étant présente sur une face dudit support souple (32), la face dudit support souple ,opposée à la portion métallique (31) de la jauge de contrainte, étant destinée à être mise en contact avec, ou collée à, un corps d'épreuve dont on veut mesurer une déformation,

b) au moins un premier substrat (2, 20), comportant au moins des moyens de traitement du signal et/ou des moyens de transmission du signal,

c) des moyens (4) de solidarisation pour assembler mécaniquement la jauge de contrainte et le premier substrat, ces moyens comportant une couche de matériau ayant des propriétés élastiques, dite couche élastique, disposée entre la face du support souple (3) sur laquelle est présente la portion métallique (31) et le premier substrat, les propriétés élastiques de cette couche élastique permettant de ne pas transmettre, ou transmettre le moins possible, la déformation de la jauge au premier substrat (2, 20).

2. Dispositif selon la revendication 1, le support souple étant un film plastique ou polymère.

3. Dispositif selon la revendication 1 ou 2, comportant des moyens de transmission du signal par radiofréquence ou par des liaisons filaires.

4. Dispositif selon la revendication 3, les moyens de transmission du signal par radiofréquence étant du type RFID.

5. Dispositif selon l'une des revendications 1 à 4, comportant des moyens de traitement du signal et des moyens de transmission du signal, et comportant en outre un deuxième substrat (200), assemblé mécaniquement avec le premier substrat (20), l'un des substrat comportant au moins une partie des moyens de transmission et l'autre substrat comportant les moyens de traitement du signal.

6. Dispositif selon l'une des revendications 1 à 5, comportant en outre des moyens formant antenne pour les moyens de transmission du signal, formés par la jauge de contrainte (3) ou déposés sur le premier ou sur le deuxième substrat (200) .

7. Dispositif selon la revendication 6, les moyens formant antenne comportant une piste métallique.

8. Dispositif selon l'une des revendications 1 à 7, au moins un des substrats (20, 200) comportant des moyens de reprise de connexions électriques (7), par exemple pour relier électriquement les moyens de transmission à des moyens de traitement du signal.

9. Dispositif selon l'une des revendications 1 à 8, ladite couche élastique étant en élastomère.

10. Dispositif selon l'une des revendications 1 à 9, comportant en outre des moyens d'alimentation électrique de la jauge et/ou des moyens de traitement et/ou de transmission du signal, ces moyens d'alimentation étant choisis parmi une microbatterie, une alimentation par radiofréquence ou une alimentation par une source externe.

11. Procédé de réalisation d'au moins un dispositif de mesures de déformation comportant l'assemblage d'au moins une jauge de contrainte (3) comprenant une portion métallique (31) et un support souple (32) et d'un premier substrat (2, 20) comportant au moins des moyens de traitement du signal et/ou des moyens de transmission du signal, une couche de matériau (4) ayant des propriétés élastiques étant intercalée dans le cadre de ladite étape d'assemblage, entre la jauge de contrainte et le premier substrat, les propriétés élastiques de cette couche élastique permettant de ne pas transmettre, ou transmettre le moins possible, la déformation de la jauge au premier substrat (2, 20), la portion métallique (31) étant présente sur une face dudit support souple (32), la face dudit support souple (32), opposée à la portion métallique (31) de la jauge de contrainte, étant destinée à être mise en contact avec, ou collée à, un corps d'épreuve dont on veut mesurer une déformation, la jauge étant assemblée avant positionnement contre un corps d'épreuve.

12. Procédé selon la revendication 11, comportant en outre la formation de moyens (5, 6) pour connecter électriquement la jauge de contrainte et le premier substrat.

13. Procédé selon la revendication 12, la formation de moyens (5, 6) pour connecter électriquement la jauge de contrainte et le premier substrat comportant la formation de connexions électriques (5) à travers ladite couche en matériau (4) comportant des propriétés élastiques, postérieurement au dépôt de cette couche sur le premier substrat (2, 20) et antérieurement à l'étape d'assemblage avec la jauge de contrainte (3).

**14.** Procédé selon l'une des revendications 11 à 13, comportant la réalisation d'une pluralité de dispositif de mesure de déformation sur un même premier substrat, ce substrat comportant lui-même une pluralité de moyens de traitement du signal et/ou de moyens de transmission du signal, ce procédé comportant l'assemblage d'une pluralité de jauges de contrainte avec ce premier substrat, chaque jauge étant associé à des moyens de traitement du signal et/ou des moyens de transmission du signal, ce procédé comportant en outre une étape d'individualisation de chaque dispositif de mesure par découpage du premier substrat.

**15.** Procédé de mesure de déformation comportant l'application d'un dispositif de mesure selon l'une des revendications 1 à 10, le support souple (32) sur lequel la partie métallique (31) de la jauge de contrainte est disposée, étant fixé ou collé, dans le cadre dudit procédé de mesure, à la surface dont les déformations sont à mesurer.

**Patentansprüche**

**1.** Vorrichtung zum Messen von Verformungen, enthaltend:

a) zumindest einen Dehnungsmessstreifen (3), der bei einer Verformung ein Signal erzeugt, wobei der Dehnungsmessstreifen einen metallischen Abschnitt (31) und einen nachgiebigen Träger (32) enthält, wobei der metallische Abschnitt (31) auf einer Seite des nachgiebigen Trägers (32) vorhanden ist, während die dem metallischen Abschnitt (31) des Dehnungsmessstreifens entgegengesetzte Seite des nachgiebigen Trägers dazu bestimmt ist, mit einem Testkörper, dessen Verformung gemessen werden soll, in Kontakt gebracht oder mit diesem verklebt zu werden,
b) zumindest ein erstes Substrat (2, 20), das zumindest Signalverarbeitungsmittel und/oder Signalübertragungsmittel enthält,
c) Verbindungsmittel (4) zum mechanischen Zusammenfügen des Dehnungsmessstreifens und des ersten Substrats, wobei diese Mittel eine Schicht aus einem Material mit elastischen Eigenschaften enthalten, elastische Schicht genannt, die zwischen der Seite des nachgiebigen Trägers (32) mit dem metallischen Abschnitt (31) und dem ersten Substrat angeordnet ist, wobei die elastischen Eigenschaften dieser elastischen Schicht es ermöglichen, dass die Verformung des Dehnungsmessstreifens nicht oder möglichst wenig auf das erste Substrat (2, 20) übertragen wird.

**2.** Vorrichtung nach Anspruch 1,
wobei der nachgiebige Träger eine Kunststoff- bzw. Polymerfolie ist.

**3.** Vorrichtung nach Anspruch 1 oder 2,
enthaltend Mittel zum Übertragung des Signals mittels Hochfrequenz oder über Drahtverbindungen.

**4.** Vorrichtung nach Anspruch 3, wobei die Mittel zur Übertragung des Signals mittels Hochfrequenz vom Typ RFID sind.

**5.** Vorrichtung nach einem der Ansprüche 1 bis 4, enthaltend Signalverarbeitungsmittel und Signalübertragungsmittel und ferner ein zweites Substrat (200), das mechanisch mit dem ersten Substrat (20) zusammengefügt ist, wobei eines der Substrate zumindest einen Teil der Übertragungsmittel und das andere Substrat die Signalverarbeitungsmittel enthält.

**6.** Vorrichtung nach einem der Ansprüche 1 bis 5, ferner enthaltend Antennenmittel für die Signalübertragungsmittel, die aus dem Dehnungsmessstreifen (3) gebildet sind oder auf dem ersten oder auf dem zweiten Substrat (200) aufgebracht sind.

**7.** Vorrichtung nach Anspruch 6, wobei die Antennenmittel eine Metallbahn enthalten.

**8.** Vorrichtung nach einem der Ansprüche 1 bis 7, wobei zumindest eines der Substrate (20, 200) Mittel zur Aufnahme von elektrischen Verbindungen (7) aufweist, beispielsweise zur elektrischen Verbindung der Übertragungsmittel mit Signalverarbeitungsmitteln.

**9.** Vorrichtung nach einem der Ansprüche 1 bis 8, wobei die elastische Schicht aus Elastomer besteht.

**10.** Vorrichtung nach einem der Ansprüche 1 bis 9, ferner enthaltend Mittel zur Stromversorgung des Messstreifens und/oder Mittel zur Verarbeitung und/oder Übertragung des Signals, wobei diese Versorgungsmittel ausgewählt sind aus einer Mikrobatterie, einer Hochfrequenzstromversorgung oder einer Stromversorgung mittels einer externen Quelle.

**11.** Verfahren zur Herstellung zumindest einer Vorrichtung zur Messung von Verformungen, umfassend das Zusammenfügen zumindest eines Dehnungsmessstreifens (3), der einen metallischen Abschnitt (31) und einen nachgiebigen Träger (32) aufweist, und eines ersten Substrats (2, 20), das zumindest Signalverarbeitungsmittel und/oder Signalübertragungsmittel enthält, wobei im Rahmen des Schritts des Zusammenfügens eine Schicht aus einem Material (4) mit elastischen Eigenschaften zwischen dem Dehnungsmessstreifen und dem ersten Substrat angeordnet wird, wobei die elastischen Eigenschaften dieser elastischen Schicht es ermöglichen, dass die Verformung des Dehnungsmessstreifens nicht oder möglichst wenig auf das erste Substrat (2, 20) übertragen wird, wobei der metallische Abschnitt (31) auf einer Seite des nachgiebigen Trägers (32) vorhanden ist, während die dem metallischen Abschnitt (31) des Dehnungsmessstreifens entgegengesetzte Seite des nachgiebigen Trägers dazu bestimmt ist, mit einem Testkörper, dessen Verformung gemessen werden soll, in Kontakt gebracht oder mit diesem verklebt zu werden, wobei der Dehnungsmessstreifen vor dem Positionieren an einem Testkörper zusammengefügt wird.

**12.** Verfahren nach Anspruch 11, ferner umfassend das Ausbilden von Mitteln (5, 6) zum elektrischen Verbinden des Dehnungsmessstreifens und des ersten Substrats.

**13.** Verfahren nach Anspruch 12, wobei das Ausbilden von Mitteln (5, 6) zur elektrischen Verbindung des Dehnungsmessstreifens mit dem ersten Substrat die Bildung von elektrischen Verbindungen (5) durch die Materialschicht (4) mit elastischen Eigenschaften nach dem Aufbringen dieser Schicht auf das erste Substrat (2, 20) und vor dem Schritt des Zusammenfügens mit dem Dehnungsmessstreifen (3) umfasst.

**14.** Verfahren nach einem der Ansprüche 11 bis 13, umfassend die Herstellung einer Vielzahl von Verformungsmessvorrichtungen auf demselben ersten Substrat, wobei dieses Substrat selbst eine Vielzahl von Signalverarbeitungsmitteln und/oder Signalübertragungsmitteln enthält, wobei das Verfahren das Zusammenfügen einer Vielzahl von Dehnungsmessstreifen mit diesem ersten Substrat umfasst, wobei jeder Messstreifen Signalverarbeitungsmitteln und/oder Signalübertragungsmitteln zugeordnet ist, wobei dieses Verfahren ferner einen Schritt der Individualisierung jeder Messvorrichtung durch Zerschneiden des ersten Substrats umfasst.

**15.** Verfahren zum Messen von Verformungen, umfassend das Anwenden einer Messvorrichtung nach einem der Ansprüche 1 bis 10, wobei der nachgiebige Träger (32), auf dem der metallische Abschnitt (31) des Dehnungsmessstreifens angeordnet ist, im Rahmen des Messverfahrens an die Fläche, deren Verformungen gemessen werden sollen, befestigt bzw. mit dieser verklebt wird.

## Claims

**1.** A device for measuring deformation including:

a) at least one strain gauge (3), producing a signal following a deformation, where the said one strain gauge comprises a metal portion (31) and a flexible support (32), said metal portion (31) being positioned on a face of said flexible support (32), the face of the flexible support (32), opposed to the metal portion (31) of the strain gauge (3) being intended to be brought into contact with, or glued to, a test body the deformation of which it is desired to measure,
b) at least one first substrate (2, 20), including at least signal processing means and/or signal transmission means,
c) securing means (4) to assemble the strain gauge and the first substrate mechanically, where these means include a layer of material having elastic properties, called the elastic layer, positioned between the face of the flexible support on which the metal portion (31) is present and the first substrate, where this elastic layer prevents the deformation of the gauge from being transmitted, or allows it to be transmitted as little as possible, to the first substrate (2, 20).

**2.** A device according to claim 1, where the flexible support is a plastic or polymer film.

**3.** A device according to claim 1 or 2, including means of signal transmission by radiofrequency or by wired connections.

4. A device according to claim 3, where the means of signal transmission by radiofrequency are of the RFID type.

5. A device according to one of the claims 1 to 4, including signal processing means and signal transmission means, and also including a second substrate (200), assembled mechanically with the first substrate (20), where one of the substrates includes at least a part of the means of transmission and the other substrate includes the signal processing means.

6. A device according to one of the claims 1 to 5, also including means forming an antenna for the signal transmission means, formed by the strain gauge (3) or plated on the first or on the second substrate (200) .

7. A device according to claim 6, where the means forming an antenna include a metal track.

8. A device according to one of the claims 1 to 7, where at least one of the substrates (20, 200) includes means to reconnect electrical connections (7), for example to connect the transmission means to signal processing means electrically.

9. A device according to one of the claims 1 to 8, where the said elastic layer is made from elastomer.

10. A device according to one of the claims 1 to 9, also including electrical means of supply of the gauge and/or signal processing and/or transmission means, where these electrical supply means are chosen from among a micro-cell, a power supply by radiofrequency, or a power supply by an external source.

11. A method of production of at least one deformation measurement device including the assembly of at least one strain gauge (3) comprising a metal portion (31) and a flexible support (32), and of a first substrate (2, 20) including at least signal processing means and/or signal transmission means, where a layer of material (4) having elastic properties is inserted, in the frame of said assembly step, between the strain gauge and the first substrate, where the elastic properties of said layer of material (4) prevents the deformation of the gauge from being transmitted, or allows it to be transmitted as little as possible, to the first substrate (2, 20), the metal portion (31) being on a face of said flexible support (32), where the face of said flexible support opposite the metal portion (31) of the strain gauge is intended to be brought into contact with, or glued to, a test body the deformation of which it is desired to measure, and where the gauge and the flexible support are assembled before being positioned against a test body.

12. A method according to claim 11, also including the formation of means (5, 6) to connect the strain gauge and the first substrate electrically.

13. A method according to claim 12, where the formation of means (5, 6) to connect electrically the strain gauge and the first substrate includes the formation of electrical connections (5) through the said layer of material (4) having elastic properties, after the coating of this layer on the first substrate (2, 20) and before the step of assembly with the strain gauge (3) .

14. A method according to one of the claims 11 to 13, including the production of multiple deformation measuring devices on a single first substrate, where this substrate itself includes multiple signal processing means and/or signal transmission means, including the assembly of multiple strain gauges with this first substrate, where each gauge is associated with signal processing means and/or signal transmission means, and where this method also includes a step of individualisation of each measuring device by cutting of the first substrate.

15. A method for deformation measurement including the application of a measuring device according to one of the claims 1 to 10, where the flexible support (32), on which the metal portion (31) of the strain gauge is positioned, is attached or glued, in the frame of said measurement method, to the surface the deformations of which are to be measured.

FIG. 1A

FIG. 1B

FIG. 2A

FIG. 2B

FIG. 3A

FIG. 3B

FIG. 3C

FIG. 3D

FIG. 3E

FIG. 3F

EP 2 425 203 B1

FIG. 4A

FIG. 4B

FIG. 4C

FIG. 4D

FIG. 4E

20

FIG. 4F

FIG. 4G

FIG. 4H

FIG. 5A

FIG. 5B

FIG. 5C

FIG.6A

FIG.6B

FIG.6C

FIG.7A

FIG.7B

FIG.7C

FIG.7D

FIG.7E

## RÉFÉRENCES CITÉES DANS LA DESCRIPTION

**Documents brevets cités dans la description**

- WO 9402815 A
- WO 2008059838 A
- EP 2085253 A
- US 20070151356 A
- US 20080223152 A
- US 20060216848 A
- US 6148662 A
- US 2007240519 A

**Littérature non-brevet citée dans la description**

- **J.AVRIL.** Encyclopédie d'analyse des contraintes, Micromesures. 1984, 242
- **H. GRANGE et al.** Thin film strain gauges on polymers : main characteristics. *sensors and actuators,* 1995, vol. A 46-47, 213-217
- **H. GRANGE et al.** A Bi-axis Accelerometer with a Chip Size Packaging Technology for a Pacemaker Application. *ESSDERC'98,* 200-203